# EUROPEAN PATENT SPECIFICATION

(11) **EP 1 752 428 B1**
(45) Date of publication and mention of the grant of the patent: **15.03.2017**
(21) Application number: 06254241.0
(22) Date of filing: 11.08.2006
(51) Int. Cl.: C04B 22/08, C04B 28/02, C04B 24/06, C04B 40/00, C04B 7/48, C04B 7/52, C04B 111/10

(54) **Method for reducing chromium (VI) in cement**
Methode zur Reduzierung von Chrom (VI) im Zement
Méthode pour la reduction du chrome (VI) dans le ciment

(30) Priority: 12.08.2005 US 707901 P; 02.08.2006 US 497754
(43) Date of publication of application: 14.02.2007
(73) Proprietor: GCP Applied Technologies Inc., Cambridge, MA 02140 (US)
(72) Inventor: Jardine, Leslie A., Salem, MA 01970 (US); Porteneuve, Charlotte B., Boston, 02108 (US); Macklin, Michael B., Westford, MA 01886 (US); Summer, Michael S., Gravesend Kent, DA12 4PN (GB); Cornman, Charles R., Maynard, MA 01754 (US); Gupta, Vijay, Woburn, MA 10801 (US)
(74) Representative: Duckworth, Timothy John

(56) References cited:
- EP-A1- 1 505 045
- WO-A1-00/06517
- WO-A1-91/15435
- WO-A1-2006/111639

## Description

### Field of the Invention

The present invention relates to the use of reducing agents for hexavalent chromium (VI) in cement, and more particularly to the use of a non-lignosulfonate-based complexing agent for increasing the storage stability of a chromate (VI) reducing additive in hydratable cement particles, and particularly as a cement additive for combining with cement clinker before or during the intergrinding process used for manufacturing hydratable cement particles.

### Background of the Invention

Chromium is an unavoidable trace element of the raw material used in the manufacture of cement clinker, which is ground to produce cement. In particular, hexavalent chromium ("chromium VI") may form in the oxidizing and alkaline burning condition of the cement kiln. Chromium VI compounds are classified as extremely toxic because of their high oxidation potential and their ability to penetrate human tissue, thereby causing dermal sensitization, allergic reactions, and eczema. As chromium VI compounds have high solubility and are released when cement and water are mixed together, they tend to come into contact with human skin during the handling of wet cement and mortar. It is desirable therefore to reduce the amount of water-soluble hexavalent chromium to trivalent chromium form. This is because the trivalent form tends to precipitate from solution as a stable complex, thereby posing smaller risks as a serious dermal irritant. Indeed, a number of reducing agents are known. However, they tend to be effective at low pH levels rather than in the high pH environments of cementitious compositions.

Stannous (tin II) sulfate can be employed as a chromium (VI) reducer for cement. Although stannous sulfate is water soluble, it quickly loses dosage efficiency over time when added as an aqueous solution into cement. The actual amount of stannous sulfate in solution is at least double the amount that is required over time when stannous sulfate is added as a powder, because upon addition to the cement the solubilized stannous sulfate has a very high surface area that increases its susceptibility to oxidation. Such a disparity often precludes the use of stannous sulfate in solution form as a matter of economics.

In Serial No. 10/890,476 filed July 13, 2004, Jardine et al. disclosed the use of aqueous dispersions containing solid tin sulfate particles that were substantially uniformly dispersed within the liquid carrier at high levels by using one or more viscosity modifying agents. The principle underlying the use of the liquid aqueous dispersions was to achieve high loading of the particles, such that the tin sulfate would be present both as a dispersed solid as well as a solubilized component. The use of the liquid also provided a greater advantage in terms of environmental health and safety by eliminating the opportunity for human inhalation of chemical dust. Moreover, the liquid carrier provides dosage accuracy and efficiency because the stannous sulfate can be pumped and metered at the same time.
WO 91/15435 discloses a cement composition comprising a cement containing water-soluble chromate and at least one manganese (II) compound in an amount sufficient to reduce the amount of water-soluble chromate to at most 2 mg of Cr (VI) per kg of the cement.
EP 1 505 045 discloses the use of iron (II) ions with citric acid and/or ascorbic acid to reduce hexavalent chromium in cement.
WO 00/06517 discloses a method for preparing chromate-free inorganic binding agents or inorganic binding agents with a reduced Cr (VI) content. Metallo-organic compounds or organo-metallic complexes with reducing properties are added to the binding agents.
WO 2006/111639 discloses an adjuvant for reducing chromium (VI) ions into chromium (III) comprising a tin (II) complex and a carboxylic acid or one of its salts.

The present invention concerns similar objectives in that it focuses upon improving the efficacy of chromium (VI) reducing additive that can be used, and in addition increases the storage stability of this additive in a manner that is economic and convenient. The present invention is also believed to be particularly suitable for meeting new legislative objectives in European Union countries regarding such chromium (VI) reducing additives.

For example, on January 17, 2005, legislation known as the Chromium (VI) Directive (2003/53/EC) was implemented in the European Union, and applied to cement and cement-containing preparations. This legislation is intended to minimize the occurrence of chromate-related allergic dermatitis arising from the use of cement. To meet these requirements, it is necessary to control the amount of soluble chromium (VI) in all bulk and bagged cements by the addition, where necessary, of small amounts of a reducing agent, such as ferrous sulfate or stannous sulfate. In the European Union, it was suggested that cements should have levels of soluble chromium (VI), when water is added to the cement, that have no more than 2 ppm (0.0002%) by mass of the dry cement.

For the cement manufacturing industry, these objectives may appear rather optimistic given the harshness of the cement milling environment, in which temperature, air, and moisture conditions can undermine the efficacy of chromium reducing agents. Most of the energy that is required by the grinding of cement clinker to produce cement appears in the form of heat, which results in a rise in temperature of the material leaving the mill. Such high milling temperatures result in a decrease of grinding efficiency, because the cement particles have an increased tendency to agglomerate. All mills have some cooling by the use of forced airflow through the mill, and some have additional water injection for cooling as well. The cement is normally transported using air or screw systems that allow individual cement particles to come into contact with air. Thereafter, the cement product is placed into paper bags, which for the most part are not moisture impermeable, or into storage silos, which for the most part are not air or moisture impermeable. Thus, the manufacture of cement involves extreme temperature, air, and moisture conditions which work to the detriment of chromium reducing agents both during manufacture and storage of the cement product.

In view of these harsh conditions in the cement mill, chromium reducing agents, such as ferrous sulfate or stannous sulfate, which are added to the cement during production, have limited periods during which they remain effective. After expiration of this period (also called "shelf life"), such chromium reducing agents can no longer be relied upon to keep the soluble chromium (VI) below 2 parts per million (ppm) when the cement comes into contact with water. Thus, prior art methods require massive initial dosages of the chromium reducer, or periodic re-dosing to ensure low levels of chromium (VI) in the cement, thereby increasing costs.

The present inventors believe that novel methods and compositions are needed for achieving storage stability of a chromium (VI) reducing agent in cement, during and after the manufacture of the cement, so that the chromium (VI) reducing agent can be relied upon to maintain chromium (VI) levels below 2 ppm, even when the cement comes into contact with water several months after the chromium (VI) reducing agent has been introduced to the hydratable cement.

### Summary of the Invention

In surmounting the disadvantages of prior art chromium (VI) reducing methods for cement, the present invention provides a novel method for maintaining the efficacy of chromium reducers in cement over time. Accordingly, the present invention provides a method comprising adding to cement clinker, before, during or after the intergrinding process used for manufacturing hydratable cement particles from cement clinker, an association complex formed in an aqueous liquid using a metal-based chromium (VI) reducer and a non-lignosulfonate-based complexing agent, said association complex being present in an amount of at least 10% to 100% based on total weight of said aqueous liquid and said association complex being formed, by combining in said aqueous liquid before said association complex is combined with the cement, said metal-based chromium (VI) reducer being selected from the group consisting of a metal salt formed from chloride, bromide, acetate, oxide, sulfide, hydroxide, or sulfate; and said non-lignosulfonate-based complexing agent comprising a polyhydroxy alcohol represented by the formula HOCH₂(CHOH)ₙCH₂OH wherein "n" is an integer of 3-8; and
intergrinding said cement clinker with said association complex wherein said metal-based chromium (VI) reducer is present in an amount of 20-5000 parts per million (ppm) for each 5 ppm of chromium (VI) contained in the cement clinker or hydratable cement particles.

A chromium (VI) reducer, such as stannous (tin II) sulfate, is combined with a non-lignosulfonate-based complexing agent to form a molecular association or coordination compound (hereinafter referred to as an "association complex") before introducing the chromium reducer to hydratable cement, thereby stabilizing the chromium (VI) reducer in the hydratable cement during storage, such that when the cement is eventually mixed with water to initiate hydration thereof, the chromium (VI) reducer remains active for reducing water-soluble chromium VI to chromium III.

The association complex can be used in the form of a concrete or masonry admixture, which is intended to be added to hydratable cement binder before, during, or after mixing the hydratable cement with water.

The association complex is used in the form of an aqueous liquid. The amount of association complex is 10-100%, and more preferably 20-100%, based on total weight of the aqueous liquid.

The association complex is added as a cement additive to cement clinker before or during the manufacturing process whereby the clinker is interground into hydratable cement particles. Particularly in this latter case, the inventors discovered that by forming the association complex first and then combining this with cement clinker before or during the intergrinding process, the resultant cement particles will have lower levels of chromium (VI) after several months of storage, when compared to a process wherein the chromium reducer is not used with such a non-lignosulfonate-based complexing agent, because the chromium (VI) reducing agent is maintained in
an effective state by the use of the association complex. The association complex may be added to the cement after the manufacturing process.

This means that methods and compositions of the invention offer cost savings to cement manufacturers as well as to concrete producers, because they do not need to use high initial dosages or to keep re-dosing the same cement over time in order to maintain minimum acceptable levels of chromium (VI) in their cement product.

The method of the invention comprises introducing to cement clinker a liquid composition having therein an association complex formed from a metal-based chromium (VI) reducer and a non-lignosulfonate-based complexing agent. Preferably, the association complex within the liquid environment is added to cement clinker, preferably before or during the intergrinding process used to manufacture hydratable cement particles.

In the method of the invention, a metal-based chromium (VI) reducer, in the association complex formed using a non-lignosulfonate-based complexing agent, is combined with cement clinker in an amount of 20-5000, and more preferably 30-2000, and most preferably 40-400 parts per million (ppm) of chromium reducer for each 5 ppm of chromium (VI) contained in the cement clinker or hydratable cement particles. Subsequently, the clinker is interground to produce hydratable cement particles having the complexed chromium (VI) reducer. Through this exemplary method, the resultant hydratable cement particles of the invention can have an average level of chromium (VI) which is less than 2 parts per million by weight of cement without further additions of a chromium (VI) reducer, during the successive 26 days after intergrinding, more preferably during the successive 56 days after intergrinding, and most preferably during the successive 84 days after intergrinding.

In forming the association complexes of the invention, the inventors prefer to combine chromium (VI) reducing metal salts, such stannous (tin II) sulfate, iron sulfate, iron acetate, etc., and the like, with non-lignosulfonate-based complexing agents selected from polyhydroxy alcohols. The non-lignosulfonate-based complexing agents are believed to chelate the metal or otherwise attach to the metal salt to minimize or to prevent precipitation or oxidation, and this in turn is believed to maintain the chromium (VI) reducer in an effective state when the treated cement is later combined with water to initiate cement hydration.

In exemplary methods and compositions of the invention, therefore, the metal-based chromium (VI) reducer, combined with a non-lignosulfonate-based complexing agent to form the association complex, is combined with cement clinker in an amount of 20-5000, and more preferably 30-2000 parts per million (ppm) of the chromium reducer for each 5 ppm of chromium (VI) contained in the cement clinker or hydratable cement particles.

A further exemplary cement additive or concrete/masonry admixture liquid composition of the invention thus comprises, in addition to water, a chromium (VI) reducer (e.g., stannous sulfate) and a complexing agent which are both in an amount of at least 1.0% to 90% by weight based on total mass of the liquid composition, and an optional viscosity modifying agent, cement additive, or a mixture thereof.

A liquid composition of the invention comprises: an association complex in a liquid (e.g., aqueous) environment, said association complex formed by combining a metal-based chromium (VI) reducer and a non-lignosulfonate-based complexing agent, said association complex being present in an amount of at least 10%-100%, and more preferably 20%-80% based on total weight of said liquid composition.

Further advantages and features of the invention are described in further detail hereinafter.

### Brief Description of Drawings

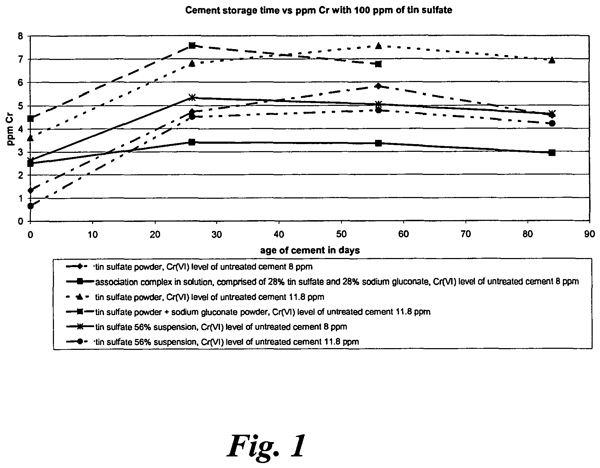

Fig. 1 is a graphic illustration of chromium (VI) content in parts per million (ppm) cement measured over time (age in terms of days storage time) of various cement samples, including a reference example of the invention, wherein cement is interground with a stannous sulfate/sodium gluconate association complex in accordance with the present invention (See Reference Examples 1-3);

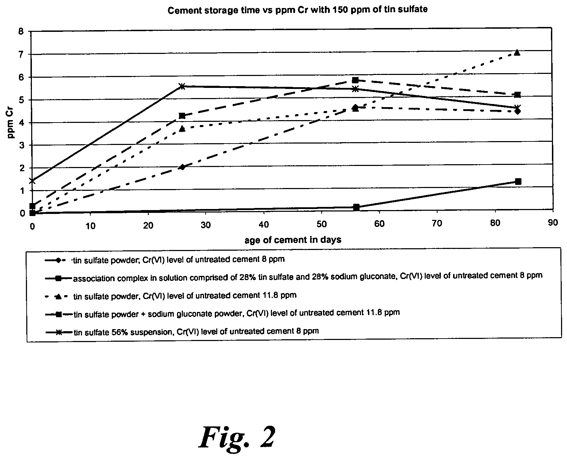

Fig. 2 is a graphic illustration of chromium content in parts per million (ppm) cement measured over the age (in days storage) of various cement samples, including a reference example of the invention wherein cement is interground with a stannous sulfate/sodium gluconate association complex in accordance with the present invention (See Reference Examples 4-6);

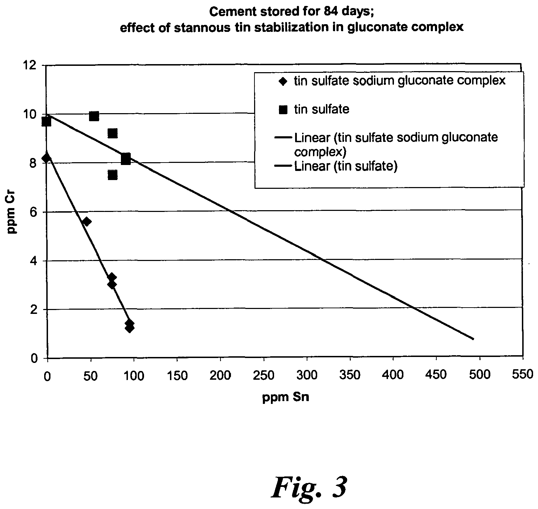

Fig. 3 is a graphic illustration of the chromium (VI) content of a cement interground with a stannous sulfate/sodium gluconate association complex based on data contained in Table 7, and the chromium (VI) content of a cement interground using a 56% tin sulfate suspension (PRIOR ART, not having the association complex) based on data contained in Table 8;

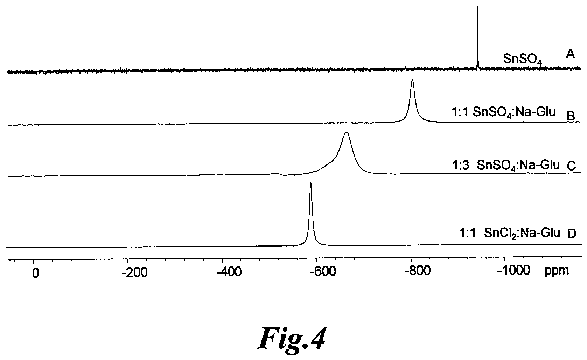

Fig. 4 is a graphic illustration of various <119> Sn Nuclear Magnetic Resonance spectra (<119> Sn NMR): (A) stannous sulfate alone; (B) stannous sulfate/sodium gluconate association complex; (C) another stannous sulfate/sodium gluconate association complex and (D) stannous chloride: sodium gluconate association complex;

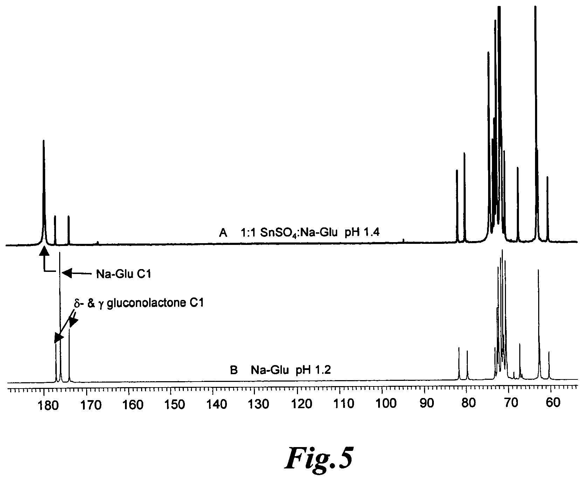

Fig. 5 is a graphic illustration of a ¹³C Nuclear Magnetic Resonance spectrum of (A) stannous sulfate/sodium gluconate association complex depicting a downfield shift in the resonance for carbon 1 (¹C) as can be seen in comparison to a ¹³C Nuclear Magnetic Resonance spectrum of (B) sodium gluconate alone; and

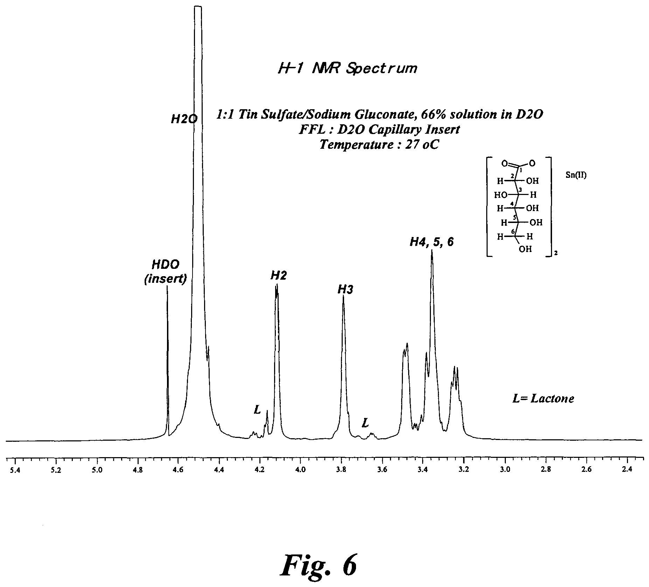

Fig. 6 is a graphic illustration of an ¹H Nuclear Magnetic Resonance spectrum of stannous sulfate/sodium gluconate association complex wherein said stannous sulfate and sodium gluconate were combined in an aqueous composition in a preferred 1;1 ratio.

### Detailed Description of Exemplary Embodiments

The term "cement" as used herein means and refers to Portland cement, which, as used in the construction trade, means a hydratable cement produced by pulverizing or intergrinding cement clinker which consists of calcium silicates usually containing one or more of the forms of calcium sulfate as an interground addition with ASTM types I, II, III, IV, or V (or other types such as EN197). "Cementitious" materials are materials that alone have hydraulic or hydratable cementing properties in that they set and harden in the presence of water. Included in cementitious materials are ground granulated blast-furnace slag (although some air cooled slags may be deemed cementitious as well) and natural cement (e.g., ordinary Portland cement). "Cementitious" materials may also include gypsum (e.g., calcium sulfate hemihydrate), aluminous cement, ceramic cement, oil well drilling cement, and others.

The term "cement," as used in the present invention, may include pozzolans, which are siliceous or aluminosiliceous materials that possess little or no cementitious value (i.e., as a binder) but which will, in finely divided form in the presence of water, chemically react with the calcium hydroxide released by the hydration of Portland cement to form materials with cementitious properties. *See e.g*., Dodson, V., Concrete Admixtures (Van Nostrand Reinhold, New York 1990), page 159. Diatomaceous earth, limestone, clay (e.g., metakaolin), shale, fly ash, silica fume, and blast furnace slag are some of the known pozzolans. Certain ground granulated blast-furnace slags and high calcium fly ashes possess both pozzolanic and cementitious properties.

In methods of the invention wherein clinker is ground to produce cement, it is believed that any of the known grinding mill types may be employed, including ball mills and roll (or roller) mills. Mills having rolls (such as roll press mills) can be used wherein the cement clinker (or slag or fly ash) are crushed on circular tables upon which rollers are revolved. Other types of roller mills employ two or more rollers that are nipped together, and clinker or other cement, or cementitious precursors, are crushed by dropping materials vertically between nipped rollers. Thus, the methods and compositions of the invention can be used in both ball mills and roller mills that are used for grinding precursor materials (e.g., clinker) to produce hydratable cement particles.

The present inventors have discovered how to maintain the storage stability of a chromium (VI) reducing additive that is interground with clinker into hydratable cement. This is accomplished by first combining stannous (tin II) ions and a non-lignosulfonate-based complexing agent to form a molecular association or coordination compound within a liquid environment (which is preferably aqueous); and thereafter introducing this "association complex" comprising the complexed stannous (tin II)/complexing agent to the cement clinker, before and/or during the grinding of the clinker to produce the hydratable cement particles.

The terms "association," "complex," and "association complex" may be used interchangeably herein to refer to a bonding between the tin salt and/or ions and the non-lignosulfonate-based complexing agent or agents. This bonding is believed to be neither covalent nor merely electrostatic in nature, but intermediate between these two types.

The term "association" as used herein is consistent with a standard dictionary definition. According to Hawley's Condensed Chemical Dictionary (11th edition), the term "association" means "a reversible chemical combination due to any of the weaker classes of chemical bonding forces." The term "association" can mean and refer to "the combination of two or more molecules due to hydrogen bonding as in the union of water molecules with one another or of acetic acid molecules with water molecules is called association," and also to a "combination of water or solvent molecules with molecules of solute or with ions, i.e., hydrate formation or solvation." The term "assocation" may also include "[f]ormation of complex ions or chelates [such] as copper ion with ammonia or copper ion with 8-hydroxy-quinoline ... [as] other examples." *See e.g*., Hawley's Condensed Chemical Dictionary (11th edition), revised by N. Irving Sax and Richard J. Lewis, Sr. (Van Nostrand Reinhold Company, Inc., New York 1987), page 103.

Also appropriate to the description of the compound formed by stannous ions and complexing agents is the term "coordination compound," which is synonomous with the term "complex compound," and which is defined in Hawley's Condensed Chemical Dictionary (11th edition) as "a compound formed by the union of a metal ion (usually a transition metal) with a nonmetallic ion or molecule called a ligand or complexing agent." Hawley's Dictionary also explains that "[a]II ligands have electron pairs on the coordinating atom ... that can be either donated to or shared with the metal ions." Hawley's Dictionary also explains that "the metal ion acts as a Lewis acid (electron acceptor) and the ligand as a Lewis base (electron donor)," and thus the "bonding is neither covalent nor electrostatic but may be considered intermediate between the two types." *See* Hawley's Condensed Chemical Dictionary (11th edition), Id. at page 307.

Thus, the present inventors prefer the term "association complex" to describe the compound formed by combining a metal capable of reducing chromium (VI), such as tin (II), with a non-lignosulfonate-based complexing agent to protect the chromium reducing ability of the metal during and after it is combined and interground with cement clinker to produce hydratable cement particles.

Without being bound by theory, the present inventors believe that the "association complex" formed between a metal such as tin (II) and a complexing agent is similar or identical to "chelate" compounds in which a metal ion is attached by coordinate links to two or more nonmetal atoms in the same molecule referred to as ligands, thereby forming one or more heterocyclic rings with the metal atom. See "chelate" definition, Hawley's Dictionary, Id. at page 249).

The term "complexing agent" as used in this invention means and includes ligands, chelates, and/or chelating agents that are operative to form association complexes with metal-based chromium (VI) reducing agents such as stannous and/or ferrous (II) ions and/or salt forms thereof.

The term "non-lignosulfonate-based," as used in herein to describe complexing agents which combine with the metal-based chromium (VI) reducing agents, means and refers to complexing agents that are not lignosulfonate or derivatives thereof. Lignosulfonates are derived from manufacturing processes used for pulping paper. A lignosulfonate derivative, for example, is described in World Patent Application No. WO 99/37593 of Chemische Werke Zell-Wildshausen GmbH, and is used for reducing chromium in concrete compositions. The present inventors do not desire to employ lignosulfonates or lignosulfonate-derived molecules as complexing agents due to the random structures of lignosulfonates and the unpredictable effect that such random molecules can have when used in cementitious compositions. Moreover, lignosulfonates tend to have high levels of impurities that can also cause unpredictable effects, such as excessive retardation, when used in cementitious compositions.

The present invention therefore concerns methods for manufacturing cement from cement clinker, by which a non-lignosulfonate-based complexing agent is used to form an association complex with a metal-based chromium (VI) reducer (e.g., stannous (tin II) ions, ferrous ions, manganese ions) in an aqueous liquid carrier, and then this association complex formed in the liquid carrier is introduced into the intergrinding process wherein clinker is converted into hydratable cement particles.

The complexing agent comprises polyhydroxy alcohols or salts thereof (represented by the formula HOCH₂(CHOH)ₙCH₂OH wherein "n" is an integer of 3-8 and more preferably 4 (and this includes glycitol which is also known as sorbitol)).

Exemplary non-lignosulfonate-based complexing agents are preferably added to cement in the amount of 0.00005-0.2%, more preferably in the amount of 0.0005-0.10%, and most preferably in the amount of 0.001-0.02%, based on the amount of dry weight cement.

While association complexes can be formed by using dissolved tin, it is also possible to provide tin in the form of solid tin sulfate particles because these can be partially dissolved to form the association complexes in the aqueous solution but can also be uniformly dispersed as a discontinuous solid particle phase in the aqueous suspension to achieve high loading. The solid tin sulfate particles are believed to be less susceptible to degradation due to the effects of oxygen, and any solubilization of the tin into the water solvent (such as may occur for example during temperature increases) will merely lead to formation of the association complexes to maintain chromium reducing ability of the dissolved the tin ions.

The present inventors believe that a complex suitable of the present invention involves the use of non-lignosulfonate-based complexing agents comprising a polyhydroxyalcohol or a salt thereof.

Exemplary liquid compositions of the invention may employ one or more viscosity modifying agents (VMA) to achieve high levels of solid particle suspensions. In other words, when a VMA is incorporated into the aqueous liquid carrier, this allows a large amount of solid tin sulfate particles to be dispersed within the aqueous liquid carrier. A preferred VMA is xanthan gum. Other VMAs suitable for use in the present invention are disclosed in US Serial No. 10/890,476 of Jardine published on May 26, 2005 (Publication No. US2005-0109243 A1). For purposes of the present invention, the use of a VMA is optional and not necessarily preferred, since the use of the complexing agent increases the effectiveness of the chromium reducer at whatever loading level is desired, and particularly in the water-soluble state.

In addition to stannous sulfate and ferrous sulfate, other water-soluble salt forms of these metals may be employed as a chromium (VI) reducer, such as chloride, bromide, acetate, oxide, and sulfide salts, as well as tin hydroxide. The metal should be employed in amounts of at least 20 parts per million (ppm) based on dry weight of the cement per 5 ppm of (water soluble) chromium (VI), more preferably at least 60 ppm, and most preferably at least 100 ppm based on dry weight of the cement per 5 ppm of chromium (VI).

An exemplary chromate-reducing liquid composition of the invention therefore may comprise stannous (tin II) ions and preferably solid tin salt particles (such as tin sulfate) in the amount of 10 to 80 percent (%) based on total weight of the liquid composition, and more preferably in the amount of 20 to 50%; a non-lignosulfonate-based complexing agent in the amount of 1 to 80%, and more preferably in the amount of 2 to 50%; water as a liquid carrier in the amount of 10 to 80%, and more preferably in the amount of 35 to 70%; and optionally one or more VMAs in the amount of 0.01 to 10%, and more preferably in the amount of 0.2 to 1.0%, all percentages based on total weight of the liquid composition.

While the invention is described herein using a limited number of embodiments, these specific embodiments are not intended to limit the scope of the invention as otherwise described and claimed herein. Modification and variations from the described embodiments exist. More specifically, the following examples are given as specific illustrations of embodiments of the claimed invention. The invention is not limited to the specific details set forth in the examples. All parts and percentages in the examples, as well as in the remainder of the specification, are by weight unless otherwise specified.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited. For example, whenever a numerical range with a lower limit, RL, and an upper limit RU, is disclosed, any number R falling within the range is specifically disclosed. In particular, the following numbers R within the range are specifically disclosed: R = RL + k*(RU - RL), where k is a variable ranging from 1% to 100% with a 1% increment, e.g., k is 1%, 2%, 3%, 4%, 5%....50%, 51%, 52%, ... 95%, 96%, 97%, 98%, 99%, or 100%. Moreover, any numerical range represented by any two values of R, as calculated above, is also specifically disclosed.

### Reference Example 1

Chromium (VI) reducing agents containing stannous tin are interground into cement at dosages to insure delivery of 100 ppm of stannous sulfate to the cement. The amount of chromium in the cement may be determined by analyzing cement pore water with ultraviolet light (UV) at 375 nanometer (NM) wavelength. The cement is then stored in paper bags for various time periods, and then the chromium content is measured again.

In this case, cement was interground using a premixed stannous sulfate and sodium gluconate mixture (forming the stannous sulfate/sodium gluconate association complex of the invention in aqueous suspension), and this is compared to a case in which cement is interground with the stannous sulfate and sodium gluconate added separately in powder form (and thus not complexed). The stannous sulfate/sodium gluconate association complex had a total solids of 56% (28% stannous sulfate, 28% sodium gluconate), such that 100 parts per million ("ppm") of stannous sulfate and 100 ppm of sodium gluconate were delivered to the cement. After the cement and stannous sulfate/sodium gluconate association complex were interground, the chromium content was confirmed as being reduced from 8.0 ppm to 2.5 ppm, a difference of 5.5 ppm. After 84 days, the chromium content was 2.9 ppm, an increase of 0.4 ppm. After 56 days, the chromium content remained at 2.5 ppm. At 26 days, the chromium content was 3.4 ppm, which represents an increase of 0.9 ppm.

When cement was interground using stannous sulfate and sodium gluconate added separately in powder form (and thus not complexed), it was found that chromium content was reduced from 11.8 ppm to 4.5 ppm, or a reduction of 7.3 ppm. After 56 days, chromium content was 6.8 ppm, representing an increase of 2.3 ppm. At 26 days, the chromium content was 7.6 ppm, representing an increase of 3.1 ppm.

Thus, it was confirmed that when cement is interground using premixed stannous sulfate/sodium gluconate association complex
the chromium content was found to be more stable over time compared to the separate components that were not premixed and complexed.

The results are summarized below in Table 1.

**Table 1**

| **Additive interground with cement** | **Chromium (Cr) level prior to addition (ppm)** | **Cr fresh cement** | **Cr in cement stored 26 days in bags** | **Cr in cement stored 56 days in bags** | **Cr in cement stored 84 days in bags** |
|---|---|---|---|---|---|
| **Stannous sulfate (28%) / sodium gluconate (28%) association complex** | **8.0** | **2.5** | **3.4** | **2.5** | **2.9** |
| **Powders of stannous sulfate and sodium gluconate added separately (not complexed)** | **11.8** | **4.5** | **7.6** | **6.8** | **N.A.** |

### Reference Example 2

A cement is interground with premixed stannous sulfate/sodium gluconate association complex in aqueous suspension, and the chromium (VI) content of this product is compared to cement that is interground using a 56% stannous sulfate suspension (not complexed). In both cases, 100 ppm of stannous sulfate is added to cement, and in the former case (involving the association complex in aqueous suspension) 100 ppm of sodium gluconate is also delivered to the cement.

The chromium (VI) content of cement interground with the association complex was found to be reduced 8.0 ppm to 2.5 ppm, representing a decrease of 5.5 ppm. After 84 days, the chromium (VI) content was 2.9 ppm, an increase of 0.4 ppm; after 56 days, chromium content remained at 2.5 ppm; and, after 26 days, chromium content was 3.4 ppm, representing an increase of 0.9 ppm.

The chromium (VI) content of the cement interground with the tin sulfate-only suspension was found to be reduced from 8.0 ppm to 2.6 ppm, representing a decrease of 5.4 ppm. After 84 days, chromium content was found to be 4.6 ppm, representing an increase of 2.0 ppm; after 56 days, chromium content was found to be 5.1 ppm, representing an increase of 2.5 ppm; and, after 26 days, the chromium content was 5.3 ppm, representing an increase of 2.7 ppm. It is observed that measured chromium increases over 26, 56, and 84 days, respectively, were 2.7, 2.5, and 2.0, and thus were not linear over time. Also included is an example of an untreated cement that was measured for chromium (VI) levels at 26, 56, and 84 days. The chromium level naturally increased at 26 days from 8.0 to 9.5, and then decreased to 7.1 at 56 days, and then decreased further to a low of 5.2 by 84 days. As the cement ages, less chromium (VI) may naturally become solubilized.

When the tin sulfate-only suspension was used with a different cement clinker having a higher initial chromium (VI) content, the chromium (VI) content was found to be reduced from 11.8 ppm to 0.7 ppm, representing a decrease of 11.1 ppm. After 84 days, chromium content was found to be 4.2 ppm, representing a change of 3.5 ppm. After 56 days, chromium content was found to be 4.8 ppm, representing a change of 4.1 ppm.

Thus, it was confirmed that when cement is interground using a premixed stannous sulfate/sodium gluconate association complex
in aqueous suspension, the chromium (VI) content was much more stable than in the case in which tin sulfate was used alone in the suspension without the sodium gluconate.

The results are summarized in Table 2 below.

**Table 2**

| **Additive interground with cement** | **Chromium (VI) level prior to addition (ppm)** | **Cr (VI) fresh cement** | **Cr (VI) in cement stored 26 days in bags** | **Cr (VI) in cement stored 56 days in bags** | **Cr (VI) in cement stored 84 days in bags** |
|---|---|---|---|---|---|
| **Stannous Sulfate (28%) and Sodium Gluconate (28%) association complex** | **8.0** | **2.5** | **3.4** | **2.5** | **2.9** |
| **Suspension with 56% tin sulfate (not complexed)** | **8.0** | **2.6** | **5.3** | **5.1** | **4.6** |
| **Suspension with 56% tin sulfate (not complexed)** | **11.8** | **0.7** | **4.5** | **4.8** | **4.2** |
| **Example of untreated cement** | **8.0** | **8.0** | **9.5** | **7.1** | **5.2** |

### Reference Example 3

A cement is interground with premixed stannous suspension, containing the premixed stannous sulfate/sodium gluconate association complex is compared to cement that is interground with tin sulfate powder alone (and thus not having the association complex).

In both cases, 100 ppm of tin sulfate is added to the cement, and, in the case of the premixed suspension having the association complex, 100 ppm of sodium gluconate is also delivered to the cement.

In cement interground with the stannous sulfate/sodium gluconate association complex (formed in aqueous suspension), the chromium (VI) content was reduced from 8.0 ppm to 2.5 ppm, representing a decrease of 5.5 ppm. After 84 days, the chromium content was 2.9 ppm, an increase of 0.4 ppm; after 56 days, chromium content remained at 2.5 ppm; and, after 26 days, chromium content was 3.4 ppm, representing an increase of 0.9 ppm.

In cement interground with tin sulfate powder (and not forming an association complex), the chromium (VI) content was reduced from 8.0 ppm to 1.3 ppm, representing a decrease of 6.7 ppm. After 84 days, chromium content was 4.6 ppm, representing an increase of 3.3 ppm; and, after 56 days, chromium content was 5.8 ppm, representing an increase of 4.5 ppm.

When the cement interground with tin sulfate powder was tested a second time, the chromium (VI) content was reduced from 11.8 ppm to 3.6 ppm, representing a decrease of 8.2 ppm. After 84 days, chromium content was found to be 6.9 ppm, representing an increase of 3.3 ppm; and, after 56 days, chromium content was 7.6 ppm, representing an increase of 4 ppm.

The test confirmed that chromium (VI) content in the cement interground with the premixed stannous sulfate/sodium gluconate association complex was much more stable than the chromium content of the cement that was interground with tin sulfate powder alone (no association complex).

The results are summarized in Table 3 below.

**Table 3**

| **Additive interground with cement** | **Chromium (Cr) level prior to addition (ppm)** | **Cr fresh cement** | **Cr in cement stored 26 days in bags** | **Cr in cement stored 56 days in bags** | **Cr in cement stored 84 days in bags** |
|---|---|---|---|---|---|
| **Stannous Sulfate (28%) and Sodium Gluconate (28%) association complex** | **8.0** | **2.5** | **3.4** | **2.5** | **2.9** |
| **Tin sulfate powder (not complexed)** | **8.0** | **1.3** | **4.7** | **5.8** | **4.6** |
| **Tin sulfate powder (not complexed)** | **11.8** | **3.6** | **6.8** | **7.6** | **6.9** |

The data for Examples 1 through 3 above are shown graphically in Fig. 1

### Reference Example 4

Chromium reducing agents containing stannous tin were interground into cement at dosages to insure delivery of 150 ppm of tin sulfate to cement. As mentioned in Reference Example 1, the chromium content of the cement is measured by measuring UV of cement pore water at 375 NM. The cement was stored in paper bags for various periods of time, and then chromium content was again measured.

In this example, the chromium (VI) content of cement that is interground with a premixed aqueous solution containing the stannous sulfate/sodium gluconate association complex is compared to the chromium content of cement that is interground with tin sulfate and sodium gluconate added separately as powders (and thus not presented in an association complex).

The premixed suspension having the association complex had a total solids of 56% (28% stannous sulfate, 28% sodium gluconate). In both cases, 150 ppm of stannous sulfate and 150 ppm of sodium gluconate were combined with cement.

In the cement sample that was interground with the premixed suspension having the association complex, chromium (VI) content is found to be reduced from 8.0 ppm to 0 ppm. After 84 days, chromium content was found to be 1.2 ppm; and, after 56 days, chromium content was found to be 0.16 ppm.

In the cement sample that was interground with the tin sulfate and sodium gluconate powders added separately (and thus not in an association complex), the chromium (VI) content was reduced from 11.8 ppm to 0.3 ppm, representing a difference of 11.5 ppm. After 84 days, the chromium content was 5.1 ppm, representing an increase of 4.8 ppm; and, after 56 days, the chromium content was 5.8 ppm, representing an increase of 5.5 ppm.

The data confirmed that cement interground with the premixed aqueous suspension having the stannous sulfate/sodium gluconate association complex performed better in lowering chromium (VI) content, and appeared to confirm that the association complex stabilized the stannous sulfate and rendered it more effective in reducing chromium (VI) levels in the cement.

The data is summarized in Table 4 below.

**Table 4**

| **Additive interground with cement** | **Chromium (Cr) level prior to addition (ppm)** | **Cr fresh cement** | **Cr in cement stored 26 days in bags** | **Cr in cement stored 56 days in bags** | **Cr in cement stored 84 days in bags** |
|---|---|---|---|---|---|
| **Stannous Sulfate (28%) and Sodium Gluconate (28%) association complex** | **8.0** | **0** | | **0.16** | **1.2** |
| **Tin sulfate powder and sodium gluconate powder (not complexed)** | **11.8** | **0.3** | **4.2** | **5.8** | **5.1** |

### Reference Example 5

The chromium (VI) content of a cement that is interground with a premixed aqueous suspension in which was formed the stannous sulfate/sodium gluconate association complex
is compared to the chromium (VI) content of a cement interground with a 56% tin sulfate suspension. In each case, 150 ppm of tin sulfate is added to the cement. In the sample containing the premixed aqueous suspension wherein the stannous sulfate/sodium gluconate assocation complex is formed, 150 ppm of sodium gluconate is delivered to the cement.

The chromium (VI) content of cement interground with the stannous sulfate/sodium gluconate association complex in the premixed aqueous suspension was reduced from 8.0 ppm to 0 ppm. After 84 days, the chromium content was found to be 1.2 ppm; and, after 56 days, chromium content was found to be 0.16 ppm.

The chromium (VI) content of the cement interground with the tin sulfate-only suspension (not complexed) was reduced from 8.0 ppm to 1.4 ppm, representing a difference of 6.6 ppm. After 84 days, the chromium content was 4.5 ppm, representing an increase of 3.1 ppm; and, after 56 days, the chromium content was 5.4 ppm, representing an increase of 4 ppm.

The chromium (VI) content of cement that was interground with the premixed aqueous suspension wherein the stannous sulfate/sodium gluconate assocation complex was formed was found to be more stable than the chromium (VI) content of cement interground with only tin sulfate.

The data is summarized in Table 5 below.

**Table 5**

| **Additive interground with cement** | **Chromium (Cr) level prior to addition (ppm)** | **Cr fresh cement** | **Cr in cement stored 26 days in bags** | **Cr in cement stored 56 days in bags** | **Cr in cement stored 84 days in bags** |
|---|---|---|---|---|---|
| **Stannous Sulfate (28%) and Sodium Gluconate (28%) association complex** | **8.0** | **0** | | **0.16** | **1.2** |
| **Suspension containing only tin sulfate (56%) (not complexed)** | **8.0** | **1.4** | **5.5** | **5.4** | **4.5** |

### Reference Example 6

The chromium (VI) content of a cement interground with
a premixed aqueous suspension of stannous sulfate/sodium gluconate association complex is compared to the chromium (VI) content of cement interground with tin sulfate powder (alone and not complexed). In each case, 150 ppm of tin sulfate is added to cement. In the case of the premixed suspension containing the stannous sulfate and sodium gluconate association complex 150 ppm of sodium gluconate is also delivered to the cement.

The chromium (VI) content of cement interground with the premixed aqueous suspension of stannous sulfate/sodium gluconate association complex was reduced from 8.0 ppm to 0 ppm. After 84 days, chromium content was found to be 1.2 ppm; and, after 56 days, chromium content was found to be 0.16 ppm.

The chromium (VI) content of cement interground with tin sulfate powder alone (and not complexed) was reduced from 8.0 ppm to 0 ppm. After 84 days, chromium content was increased to 4.3 ppm; and, after 56 days, chromium content was increased to 4.6 ppm.

The chromium (VI) content of a second sample of cement interground with the tin sulfate powder was found to be reduced from 11.8 ppm to 0 ppm. After 84 days, chromium content was 6.9 ppm; and, after 56 days, chromium content was 4.5 ppm, representing an increase of 4.5 ppm.

The data confirmed that chromium (VI) content in cement Interground with the premixed aqueous suspension in which was formed the stannous sulfate/sodium gluconate association complex was more effective in reducing the chromium (VI) content in cement interground when compared to tin sulfate powder alone (not complexed).

The data is summarized in Table 6 below.

**Table 6**

| **Additive interground with cement** | **Chromium (VI) level prior to addition (ppm)** | **Cr (VI) fresh cement** | **Cr (VI) in cement stored 26 days in bags** | **Cr (VI) in cement stored 56 days in bags** | **Cr (VI) in cement stored 84 days in bangs** |
|---|---|---|---|---|---|
| **Stannous Sulfate (28%) and Sodium Gluconate (28%) association complex** | **8.0** | | **0** | **1.6** | **1.2** |
| **tin sulfate powder (not complexed)** | **8.0** | **0.0** | **2.0** | **4.6** | **4.3** |
| **tin sulfate powder (not complexed)** | **8.0** | **0.0** | **3.7** | **4.5** | **6.9** |

The data for Reference examples 4 through 6 are illustrated in Fig. 2.

### Reference Example 7

A composition containing the stannous
sulfate/sodium gluconate association complex formed in a premixed aqueous suspension, operative for maintaining storage stability of chromium (VI) reducer, is made as follows. 43.3 parts of water are added to a mixing vessel. 14 parts of tin sulfate are dispersed or dissolved in this water. Next, 0.68 parts of a xanthan gum are added to thicken the dispersion (the use of this gum as a viscosity modifying agent is believed to be optional). After the dispersion has visibly thickened, an additional 14 parts of tin sulfate are dispersed into the mixture. Then 28 parts of sodium gluconate are dispersed in the mixture. Final product viscosity is 13000-16000, measuring at 6 rpm on a Brookfield viscometer (spindle #4). Final product specific gravity is 1.50-1.80. Final product pH is 0.5-2.0.

### Reference Example 8

A composition for use in maintaining the storage
stability of chromium (VI) reducer in cement or cement clinker is made as follows. 30 parts of water are added to a mixing vessel. 35 parts of sodium gluconate are dissolved in this water. 35 parts of tin sulfate are added to this water. Viscosity is 225 cps (6 rpm on a Brookfield viscometer, spindle #4). Specific gravity is 1.64. Final product pH is 0.5-2.0.

### Reference Examples 9

Another composition, containing stannous sulfate/sodium gluconate association complex in a premixed aqueous suspension, operative for maintaining storage stability of chromium (VI) reducer, is made as follows: 43.3 parts of water are added to a mixing vessel; 14 parts of tin sulfate are dispersed or dissolved in this water; next, 0.6 parts of a xanthan gum is added to thicken the dispersion; and, after the dispersion has visibly thickened, an additional 23.3 parts of tin sulfate are dispersed in the mixture. Then 18.7 parts of sodium gluconate are dispersed in the mixture. Final product viscosity is 10,000-14,000 (measured at 6 rpm on a Brookfield viscometer, spindle #4). Final product specific gravity is 1.50-1.80. Final product pH is 0.5-2.0.

### Reference Example 10

An industrial cement is interground with a stannous sulfate/ sodium gluconate association complex and the chromium (VI) content of this product is compared to cement that is interground using a 56% tin sulfate suspension (not having the association complex). In both cases, various amounts of tin sulfate are added to cement, and in the former case (involving the association complex in aqueous suspension) an equal amount of sodium gluconate is also delivered to the cement. Cement was then stored and chromium content was re-measured at various time intervals up to 84 days.

After 84 days of storage, the stannous tin delivered in the form of the association complex was more effective in reducing Chromium (VI) levels than was the stannous tin alone delivered in the form of a stannous sulfate suspension. For example, cement with 75 or 95 ppm of stannous tin delivered in the form of the association complex had a Cr(VI) content of 3.2 or 1.4 ppm. Cement with 77 or 92 ppm of Stannous tin delivered in the form of the stannous sulfate suspension had a Cr(VI) content of 8.4 or 8.2 ppm.

The chromium (IV) content of the cement interground with a stannous sulfate/sodium gluconate association complex was measured, and the data shown in Table 7 below, while the chromium (VI) content of cement interground using a 56% tin sulfate suspension (tin sulfate alone) is shown in Table 8 below and graphically illustrated in Fig. 3.

**Table 7**

| **Stannous Sulfate/Sodium Gluconate Association Complex** | | | | | | | |
|---|---|---|---|---|---|---|---|
| | | | | | | | |

| **Age in days** | | | | **0** | **28** | **56** | **84** |
|---|---|---|---|---|---|---|---|
| **Parts per million (ppm)** | **ppm product** | **ppm tin sulfate** | **ppm Sn(II)** | **ppm Cr(VI)** | **ppm Cr(VI)** | **ppm Cr(VI)** | **ppm Cr(VI)** |
| | 0 | | 0 | 9.8 | 10.1 | 8.9 | 8.2 |
| | 300 | 84 | 46 | 4.6 | 5.1 | 5.0 | 5.6 |
| | 490 | 137 | 75 | 1.9 | 2.8 | 3.0 | 3.3 |
| | 490 | 137 | 75 | 1.9 | 2.6 | 3.2 | 3.0 |
| | 620 | 174 | 95 | 0.5 | 0.0 | 0.9 | 1.4 |
| | 620 | 174 | 95 | 0.5 | 0.0 | 0.8 | 1.2 |

**Table 8**

| **Stannous Sulfate (Alone) in Suspension** | | | | | | | |
|---|---|---|---|---|---|---|---|
| **Age in days** | | | | **0** | **28** | **56** | **84** |
| **Parts per million (ppm)** | **ppm product** | **ppm tin sulfate** | **Ppm Sn(II)** | **ppm Cr(VI)** | **ppm Cr(VI)** | **ppm Cr(VI)** | **ppm Cr(VI)** |
| | | | 0.0 | 10.8 | 10.5 | 10.5 | 9.7 |
| | 180 | 101 | 55 | 6.2 | 8.6 | 9.7 | 9.9 |
| | 250 | 140 | 77 | 3.0 | 7.4 | 9.7 | 7.5 |
| | 250 | 140 | 77 | 3.0 | nd | 9.5 | 9.2 |
| | 300 | 168 | 92 | 0.0 | 5.9 | 9.0 | 8.2 |
| | 300 | 168 | 92 | 0.0 | 6.6 | 7.3 | 8.1 |

### Reference Example 11

Chromium (VI) reducing agents containing stannous tin are interground into cement at dosages to insure delivery of 28 or 55 ppm of stannous tin to the cement. The amount of chromium (VI) in the cement may be determined by analyzing cement pore water with ultraviolet light (UV) at 375 nanometer (NM) wavelength. The cement is then stored in paper bags for various time periods, and then the chromium (VI) content is measured again.

In this case, cement is interground using a premixed stannous sulfate/ sodium gluconate association complex formed in an aqueous suspension, and this is compared to cement which is interground with premixed stannous chloride and sodium gluconate (forming another association complex of the present invention).

The stannous sulfate/sodium gluconate association complex was confirmed to have total solids of 56% (28% stannous sulfate, 28% sodium gluconate). The stannous chloride/sodium gluconate association complex was confirmed to contain 21% stannous chloride, 41% sodium gluconate, and 35% water.

Both products reduced the initial Cr (VI) level of the fresh cement, from an untreated level of 8 ppm Cr(VI), as shown in table 9 below.

The chromium (VI) content of cement containing the stannous sulfate/sodium gluconate association complex increased by 0.5 ppm after 60 days of storage with at each dosage. However, the chromium content of cement containing the stannous chloride/sodium gluconate association complex increased by 1.6-1.7 ppm after 60 days of storage.

Thus, the present inventors discovered that when cement is interground using the premixed stannous sulfate/sodium gluconate association complex, the stannous (tin II) component to lower chromium (VI) content was found to be more stable over time compared to the stannous chloride/sodium gluconate association complex.

Hence, the stannous sulfate/ sodium gluconate association complex is most preferred. The results are summarized below in Table 9.

**Table 9**

| **Additive interground with cement** | **Chromium (VI) level prior to addition (ppm)** | **Cr (VI) fresh cement** | **Cr (VI) in cement stored 60 days in bags** | **Change in Cr (VI) after cement storage** |
|---|---|---|---|---|
| **Stannous sulfate (28%) / sodium gluconate (28%) association complex delivering 28 ppm Sn(II)** | **8.0** | **3.7** | **4.2** | **+0.5** |
| **Stannous sulfate (28%) / sodium gluconate (28%) association complex delivering 55 ppm Sn(II)** | **8.0** | **2.9** | **3.1** | **+0.5** |
| **Stannous chloride/sodium gluconate association complex delivering 28ppm Sn(II)** | **8.0** | **4.8** | **6.4** | **+1.6** |
| **Stannous chloride/sodium gluconate association** | **8.0** | **1.7** | **3.4** | **+1.7** |
| **complex delivering 55 ppm Sn(II)** | | | | |

### Reference Example 12

The present inventors made several association complexes and graphic illustrations of the these assocation complexes in terms of their Nuclear Magnetic Resonance (NMR) Spectra (¹¹⁹Sn NMR, ¹³C NMR, and ¹H NMR are set forth in Figs. 4 through 7, respectively.

NMR Spectra were acquired on a 9.4 Tesla Varian UNITYINOVA spectrometer operating at 399.8 MHz for ¹H, 100.5 MHz for ¹³C , and 149.1 MHz for ¹¹⁹Sn nuclei. Experiments were conducted without chemical, or physical perturbation of the sample. A capillary insert containing deuterium oxide was used for field frequency lock. Carbon and proton NMR spectra were referenced to an external 10 mM solution of sodium trimethysilylpropionate in D₂O. A 10 mM solution of tetramethyltin in CDCl₃ was used as an external reference standard for ¹¹⁹Sn NMR spectroscopy. All NMR spectra in this report were carried out at the fixed temperature of 27° Celcius.

¹¹⁹Sn NMR spectra of stannous sulfate, as well as mixtures of stannous sulfate or stannous chloride with sodium gluconate, are shown in Fig. 4. Spectrum A shows a single sharp resonance for stannous sulfate (SnSO₄). Addition of one equivalent (spectrum B) or three equivalents (spectrum C) of sodium gluconate cause a broadening of the resonance and a shift to lower field suggesting chemical exchange among two or more transient tin-containing species, such as stannous sulfate and a stannous sulfate/sodium gluconate adduct (association complex). The composition is believed to be undergoing rapid exchange within the NMR timescale (microseconds). This exchange is believed to involve any or all of the ligands associating with the tin ions at the same time: gluconate, sulfate, and water.

Hence, compositions comprise a
composition wherein a chromium (VI) reducer (e.g., stannous sulfate) is associated with a complexing agent (e.g., sodium gluconate) in an aqueous environment (e.g., a suspension), and the NMR spectrum for the chromium (VI) reducer is broadened when compared to the NMR spectrum for the chromium (VI) reducer alone.

Spectrum D is a 1:1 molar mixture of sodium gluconate with stannous chloride (SnCl₂). In comparison to spectra B and C, the downfield resonance and narrower line width in spectrum D shows that the 1:1 mixture of sodium gluconate and stannous chloride is not undergoing rapid exchanges of associations involving gluconate, chloride, or water.

The ¹³C NMR data supports the supposition that the stannous sulfate/sodium gluconate complex is in equilibrium with free sodium gluconate. Fig. 5 is a graphic illustration of ¹³C NMR spectra depicting a downfield shift in the resonance for ¹C of the sodium gluconate composition, indicating changes in the magnetic environment of the ¹C nucleus. The presence and intensity of the ¹C resonances for the d- and g-gluconolactone strongly suggest the presence of free gluconate, and thus free stannous sulfate in the mixture of stannous sulfate/sodium gluconate. If the sodium gluconate were fully coordinated to the stannous sulfate in the mixture, one would expect the lactone peaks to be dramatically reduced or eliminated.

Hence, compositions comprise a composition wherein a chromium (VI) reducer (e.g., stannous sulfate) is associated with a carbon-containing complexing agent (e.g., sodium gluconate) in an aqueous environment, and the ¹³C NMR spectrum for ¹C of the complexing agent is shifted downfield when compared to the ¹C spectrum for that of the complexing agent alone.

The ¹H NMR data supports the supposition that the stannous sulfate/sodium gluconate association complex is in equilibrium with free water molecules. Fig. 6 illustrates a broadening of water resonance in terms of the ¹H NMR spectra, suggesting the active association/dissociation of water molecules (H₃O+) with the stannous (tin II) ions.

Hence, compositions comprise a
composition wherein a chromium (VI) reducer (e.g., stannous sulfate) is associated with a carbon-containing complexing agent (e.g., sodium gluconate) in an aqueous environment, and the ¹H NMR spectrum for ¹C of the complexing agent indicates active association/dissociation of water molecules (H₃O+) with the stannous (tin II) ions.

It is observed that both the 1:1 association complex of stannous sulfate/sodium gluconate and the 1:1 association complex of stannous chloride/sodium gluconate were evaluated in example 11, with the 1:1 stannous sulfate/sodium gluconate association complex exhibiting the most stable and effective performance for reducing chromium (VI) levels.

From this performance data and the NMR data, it can be suggested that the association complex formed by premixing stannous sulfate and sodium gluconate together in an aqueous environment, form a labile, weakly associated adduct (or adducts) of stannous sulfate/sodium gluconic acid, and that free stannous ions and gluconic acid groups may also be present.
On the other hand, the association complex formed by combining stannous chloride and sodium gluconate did not show evidence of equilibrium with free stannous chloride and sodium gluconate.

The foregoing reference examples are intended for illustrative purposes only, and not to limit the scope of the invention, as modifications and variations may be envisioned by those of ordinary skill in view of the disclosures contained herein.

## Claims

1. A method comprising:
adding to cement clinker, before, during or after the intergrinding process used for manufacturing hydratable cement particles from cement clinked, an association complex formed in an aqueous liquid using a metal-based chromium (VI) reducer and a non-lignosulfonate-based complexing agent, said association complex being present in an amount of at least 10% to 100% based on total weight of said aqueous liquid and said association complex being formed, by combining in said aqueous liquid before said association complex is combined with the cement, said metal-based chromium (VI) reducer being selected from the group consisting of a metal salt formed from chloride, bromide, acetate, oxide, sulfide, hydroxide, or sulfate; and said non-lignosulfonate-based complexing agent comprising a polyhydroxy alcohol represented by the formula HOCH₂(CHOH)ₙCH₂OH wherein "n" is an integer of 3-8; and
intergrinding said cement clinker with said association complex wherein said metal-based chromium (VI) reducer is present in an amount of 20-5000 parts per million (ppm) for each 5 ppm of chromium (VI) contained in the cement clinker or hydratable cement particles.

2. A method according to claim 1 wherein said metal is provided in the form of stannous chloride or stannous sulfate.

3. A method according to any one of the preceding claims wherein, in said non-lignosulfonate-based complexing agent, "n" is 4.

4. A method according to claim 3 wherein said non-lignosulfonate-based complexing agent is sorbitol.

5. A method according to any one of the preceding claims further comprising adding to the cement at least one cement additive selected from the group consisting of triisopropanolamine, triethanolamine, glycols, sugars or chloride salts.

6. A method according to any one of the preceding claims wherein, in said aqueous liquid wherein said association complex is formed using said metal-based chromium (VI) reducer, a xanthan gum viscosity modifying agent is incorporated to disperse metal-based chromium (VI) reducer within said aqueous liquid.

7. A. method according to any one of the preceding claims wherein said metal-based chromium (VI) reducer, in said association complex, is combined with said cement clinker or to said hydratable cement particles in an amount of 30-2000 parts per million (ppm) of chromium reducer for each 5 ppm of chromium (VI) contained in said cement clinker or hydratable cement particles.

8. A method according to any one of the preceding claims wherein said hydratable cement particles, after combination with said association complex containing said metal-based chromium (VI) reducer but without further addition of a chromium (VI) reducer, have an average level of chromium (VI) which is less than 2 parts per million by weight of cement, during the successive 26 days after said intergrinding.

## Patentansprüche

1. Verfahren, umfassend:
Hinzufügen eines Verbindungskomplexes, gebildet in einer wässrigen Flüssigkeit unter Verwendung eines Metall-basierten Chrom (VI)-Reduzierers und eines nicht Ligninsulfonat-basierten Komplexbildners zu Zementklinker vor, während oder nach dem zum Herstellen hydratisierbarer Zementpartikel von Zementklinker verwendeten Vermahlungsprozess, wobei der Verbindungskomplex in einer Menge von mindestens 10 % bis zu 100 % basierend auf dem Gesamtgewicht der wässrigen Flüssigkeit vorhanden ist und der Verbindungskomplex durch Kombinieren in der wässrigen Flüssigkeit gebildet wird, bevor der Verbindungskomplex mit dem Zement kombiniert wird, wobei der Metall-basierte Chrom (VI)-Reduzierer gewählt ist aus der Gruppe bestehend aus einem Metallsalz, gebildet aus Chlorid, Bromid, Acetat, Oxid, Sulfid, Hydroxid oder Sulfat; und wobei der nicht Ligninsulfonat-basierte Komplexbildner einen Polyhydroxyalkohol, dargestellt durch die Formel HOCH₂(CHOH)ₙCH₂OH umfasst, wobei "n" eine Ganzzahl von 3-8 ist; und
Vermahlen des Zementklinkers mit dem Verbindungskomplex, wobei der Metall-basierte Chrom (VI)-Reduzierer in einer Menge von 20-5000 ppm für jede 5 ppm von im Zementklinker oder in den hydratisierbaren Zementpartikeln enthaltenem Chrom (VI) vorhanden ist.

2. Verfahren nach Anspruch 1, wobei das Metall in Form von Zinnchlorid oder Zinnsulfat bereitgestellt ist.

3. Verfahren nach einem der vorangehenden Ansprüche, wobei in dem nicht Ligninsulfonat-basierten Komplexbildner "n" 4 ist.

4. Verfahren nach Anspruch 3, wobei der nicht Ligninsulfonat-basierte Komplexbildner Sorbitol ist.

5. Verfahren nach einem der vorangehenden Ansprüche, ferner umfassend ein Hinzufügen von mindestens einem Zementzusatz, gewählt aus der Gruppe bestehend aus Triisopropanolamin, Triethanolamin, Glycolen, Zucker oder Chloridsalzen zum Zement.

6. Verfahren nach einem der vorangehenden Ansprüche, wobei in der wässrigen Flüssigkeit, in der der Verbindungskomplex unter Verwendung des Metall-basierten Chrom (VI)-Reduzierers gebildet wird, ein Xanthangummi-Viskositätsmodifizierungsmittel enthalten ist, um Metall-basierten Chrom (VI)-Reduzierer in der wässrigen Flüssigkeit zu dispergieren.

7. Verfahren nach einem der vorangehenden Ansprüche, wobei der Metall-basierte Chrom (VI)-Reduzierer im Verbindungskomplex mit dem Zementklinker oder zu den hydratisierbaren Zementpartikeln in einer Menge von 30-2000 Teile pro Million (ppm) Chromreduzierer für jede 5 ppm von im Zementklinker oder in den hydratisierbaren Zementpartikeln enthaltenem Chrom (VI) kombiniert ist.

8. Verfahren nach einem der vorangehenden Ansprüche, wobei die hydratisierbaren Zementpartikel nach Kombination mit dem Verbindungskomplex, der den Metall-basierten Chrom (VI)-Reduzierer enthält, aber ohne weiteres Hinzufügen eines Chrom (VI)-Reduzierers, während den ersten 26 Tagen nach dem Vermahlen einen Durchschnittsgehalt an Chrom (VI) haben, der weniger als 2 Teile pro Million des Zementgewichts ist.

## Revendications

1. Procédé comprenant :
l'ajout à du clinker de ciment, avant, pendant ou après le mélange de béton utilisé pour fabriquer des particules de ciment hydratables, un complexe d'association formé dans un liquide aqueux par le biais d'un réducteur métallique de chrome (VI), un agent complexant à base de non-lignosulfonate, ledit complexe d'association étant présent en une quantité comprise entre au moins 10 % et 100 % sur la base du poids total dudit liquide aqueux et dudit complexe d'association étant formé, en se combinant dans ledit liquide aqueux avant que ledit complexe d'association ne soit combiné avec le ciment, ledit réducteur métallique de chrome (VI) étant choisi dans le groupe constitué d'un sel métallique formé à partir de chlorure, de bromure, d'acétate, d'oxyde, de sulfure, d'hydroxyde ou de sulfate ; et ledit agent complexant à base de non-lignosulfonate comprenant un alcool polyhydroxy représenté par la formule HOCH₂(CHOH)ₙCH₂OH, « n » étant un nombre entier compris entre 3 et 8 ; et
le mélange de béton dudit clinker de ciment avec ledit complexe d'association, ledit réducteur métallique de chrome (VI) étant présent en une quantité comprise entre 20 et 5000 parties par million (ppm) pour chaque quantité de 5 ppm de chrome (VI) contenue dans le clinker de ciment ou les particules de ciment hydratables.

2. Procédé selon la revendication 1, ledit métal étant disponible sous forme de chlorure stanneux ou de sulfate stanneux.

3. Procédé selon l'une quelconque des revendications précédentes, dans lequel, dans ledit agent complexant à base de non-lignosulfonate, « n » est égal à 4.

4. Procédé selon la revendication 3 dans lequel ledit agent complexant à base de non-lignosulfonate est le sorbitol.

5. Procédé selon l'une quelconque des revendications précédentes, comprenant en outre l'ajout au ciment d'au moins un additif de ciment choisi dans le groupe constitué de triisopropanolamine, triéthanolamine, glycols, sucres ou sels de chlorure.

6. Procédé selon l'une quelconque des revendications précédentes, dans lequel, dans ledit liquide aqueux, ledit complexe d'association étant formé par le biais dudit réducteur métallique de chrome (VI), un agent modifiant la viscosité de la gomme xanthique est incorporé pour disperser le réducteur métallique de chrome (VI) à l'intérieur dudit liquide aqueux.

7. Procédé selon l'une quelconque des revendications précédentes, dans lequel ledit réducteur métallique de chrome (VI), dans ledit complexe d'association, est combiné avec ledit clinker de ciment ou lesdites particules de ciment hydratables en une quantité comprise entre 30 et 2000 parties par million (ppm) de réducteur de chrome pour chaque quantité de 5 ppm de chrome (VI) contenue dans ledit clinker de ciment ou les particules de ciment hydratables.

8. Procédé selon l'une quelconque des revendications précédentes, dans lequel lesdites particules de ciment hydratables, après avoir été combinées avec ledit complexe d'association contenant ledit réducteur métallique de chrome (VI) mais sans autre ajout d'un réducteur de chrome (VI), ont un niveau moyen de chrome (VI) qui est inférieur à deux parties par million par poids de ciment, pendant les 26 jours suivant ledit mélange de béton.
